(19) Europäisches Patentamt

European Patent Office

Office européen des brevets

(11) Veröffentlichungsnummer: **0 226 077**
**B1**

(12) **EUROPÄISCHE PATENTSCHRIFT**

(45) Veröffentlichungstag der Patentschrift:
13.06.90

(21) Anmeldenummer: 86116255.0

(22) Anmeldetag: 24.11.86

(51) Int. Cl.⁵: **B60T 8/72**, B60T 8/84, B60T 8/32

(54) **Antiblockierregelsystem für Fahrzeuge.**

(30) Priorität: 05.12.85 DE 3543038

(43) Veröffentlichungstag der Anmeldung:
24.06.87 Patentblatt 87/26

(45) Bekanntmachung des Hinweises auf die Patenterteilung:
13.06.90 Patentblatt 90/24

(84) Benannte Vertragsstaaten:
DE FR GB SE

(56) Entgegenhaltungen:
EP-A- 0 051 801
DE-A- 2 119 590
DE-A- 2 243 260
DE-A- 2 518 196
GB-A- 1 581 943
GB-A- 2 157 381
US-A- 3 535 004

(73) Patentinhaber: ROBERT BOSCH GMBH, Postfach 50,
D-7000 Stuttgart 1(DE)

(72) Erfinder: Schramm, Herbert, Im Götzen 25,
D-7000 Stuttgart 1(DE)
Erfinder: Wörner, Dieter, Blaneksteinstrasse 5,
D-7127 Pleidelsheim(DE)
Erfinder: Möller, Hubert, Bergheimer Strasse 37,
D-7000 Stuttgart 31(DE)

(74) Vertreter: Kammer, Arno, Dipl.-Ing., ROBERT BOSCH
GmbH Zentralstelle Patente 2 Postfach 50,
D-7000 Stuttgart 1(DE)

**Beschreibung**

Die Erfindung betrifft ein Antiblockierregelsysten für Fahrzeuge mit den Merkmalen des Oberbegriffs des Anspruchs 1.

Vereinfachte Antiblockierregelsysteme mit gemeinsamer Regelung der Räder einer Achse oder auch mehrerer Achsen (z. B. zwei oder drei Hinterachsen) mit einer Sensierung der Radgeschwindigkeit an nur je einem dieser Räder jeder Fahrzeugseite und abwechselndem Umschalten auf select-high- und select low-Regelung sind z.B. aus der DE-A 21 19 590, 25 18 196, 22 43260 und der US-A 3 535 004 bekannt. In diesen Literaturstellen sind verschiedene Umschaltkriterien zwischen select-low- und select-high-Regelung beschrieben.

Eine select-low-Regelung wird gewünscht, wenn die Reibwerte an den Rädern beider Fahrzeugseiten nicht stark voneinander abweichen und auch, wenn der vom Fahrer eingesteuerte Druck nahe dem Druck liegt, bei dem das low-Rad zu blockieren beginnt. Die Regelkriterien können aus Druckmessungen, aber auch aus den Ansteuerzeiten der Ventile abgeleitet werden. Ist eine der Regelungsarten wirksam gemacht, so wird von Zeit zu Zeit geprüft, ob die Verhältnisse, die zur Einschaltung dieser Regelungsart führten, noch vorliegen.

Wendet man diese Regelungstechnik bei Fahrzeugen an, die Doppel- oder Dreiachsaggregate aufweisen und wird von deren Räder jeder Fahrzeugseite nur jeweils die Fahrzeuggeschwindigkeit eines Rads durch den Meßwertgeber überwacht, so kann es bei select-high-Betrieb vorkommen, daß von allen vier oder sechs Rädern nur noch das Rad dreht, das gerade die Regelung bestimmt. Die Ausrüstung mehrerer oder aller Räder mit Meßwertgebern für die Radgeschwindigkeit ist teuer, da solche Meßwertgeber zur Geschwindigkeitsmessung exakt arbeiten müssen und deshalb relativ teuer sind.

Die der Erfindung zugrundeliegende Aufgabe besteht darin, das Blockieren einer Mehrheit der Räder mit einfachen Mitteln zu vermeiden.

Gelöst wird diese Aufgabe durch die in Anspruch l angegebenen Merkmale.

Aus den verwendeten Drehanzeigern muß nicht die exakte Radgeschwindigkeit und deren Ableitung laufend gewonnen werden, vielmehr genügt es hier innerhalb einer vollen Raddrehung festzustellen, ob das Rad sich noch mit einer vorgegebenen Drehzahl und damit Radgeschwindigkeit von z.B. > 10 km/h dreht. Hierzu ist es z.B. möglich, Unregelmäßigkeiten am Rad wie z.B. die Felgenschrauben oder dergleichen abzutasten. Es genügt pro voller Radumdrehung zwei Impulse zu erhalten. Das System kann, wenn es entsprechend ausgelegt ist, «lernen» wieviel Impulse pro Radumdrehung bei nicht gebremster Fahrt kommen und aus deren Abstand, bzw. ankommenden Impulsen pro vorgegebener Zeitspanne ableiten, ob das Rad noch oberhalb einer vorgegebenen Drehzahl dreht. Wird an mehreren Rädern oder allen Rädern außer der mit Drehgeschwindigkeitsmeßwertgebern ausgerüsteten Rädern festgestellt, daß diese nicht mehr oberhalb einer vorgegebenen Grenzdrehzahl drehen, so wird durch dieses Kriterium auf select-low Regelung umgeschaltet.

Dieses Umschaltkriterium kann zusätzlich zu obigen Kriterien angewandt werden; jedoch könnte es auch allein umgesetzt werden.

Anhand der Zeichnung soll ein Ausführungsbeispiel des erfindungsgemäßen Antiblockierregelsystems erläutert werden. Es zeigen:

Fig. 1 ein Prinzipschaltbild eines Ausführungsbeispiels,

Fig. 2 ein Detail der Schaltungsanordnung 10 der Fig. 1.

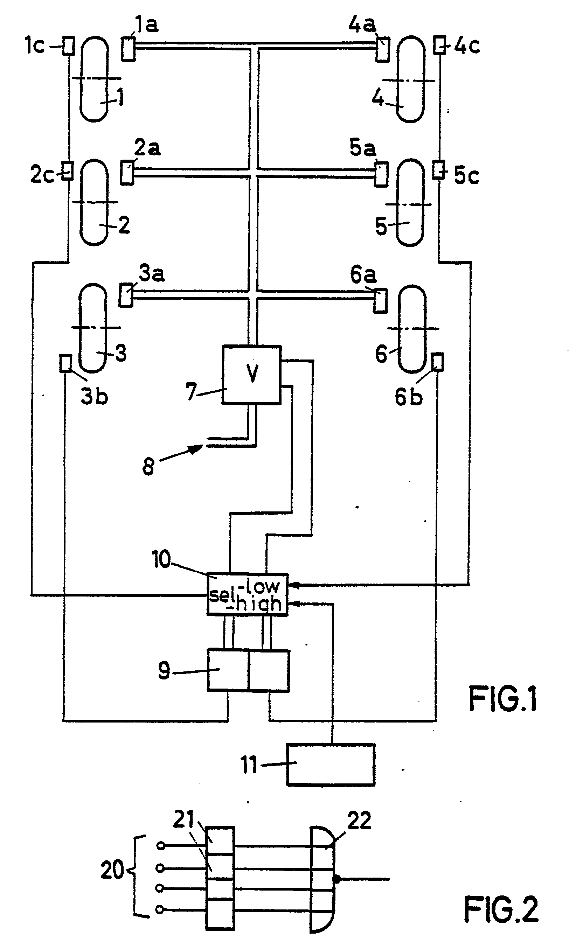

In Fig.1 ist ein Fahrzeug unterstellt, das drei Hinterachsen mit Radpaaren lund 4, 2 und 5 und 3 und 6 aufweist. Diesen Rädern 1-6 sind Radbremsen 1a-6a zugeordnet, denen normalerweise der vom Fahrer erzeugte und bei 8 eingespeiste Bremsdruck zugeführt wird. In die Bremsleitung ist eine Druckregeleinheit 7 z. B. eine Magnetventilanordnung eingeschaltet, die in ihren drei Stellungen Bremsdruckaufbau, -abbau und Konstanthaltung ermöglicht.

Den Rädern 3 und 6 Drehgeschwindigkeitsmeßwertgeber 3b und 6b zugeordnet, deren Signale einer zweikanaligen Auswerteschaltung 9 zugeführt werden, die in jedem Kanal daraus Bremsdrucksteuersignale und zwar Druckhaltesignale und Druckabbausignale zur Variation des Bremsdrucks erzeugt. Die Signale welchen Kanals zur Druckregeleinheit 7 gelangen wird durch eine Schalteinrichtung 10 bestimmt, die von einer Steuerschaltung 11 entsprechend umgeschaltet wird.

Die Steuerschaltung 11 erhöht z. B. in der anfangs eingeschalteten Grundstellung "select'low" von Zeit zu Zeit den Bremsdruck bis auch das high-Rad Blockierneigung zeigt und prüft, ob die Drücke in diesen beiden Regelmodi wesentlich unterschiedlich sind. Ist dies der Fall, so bleibt select-high z. B. für eine bestimmte Zeit wirksam. Im select-high-Betrieb wird danach geprüft ob eine Rückumschaltung notwendig ist oder nicht.

Hierzu wird der Druck soweit abgesenkt, daß das low-Rad wieder anläuft. Danach wird wieder der Druck aufgebaut und der Druckunterschied bestimmt den anzuwendenden Regelungsmodus.

Den Rädern 1, 2, 4 und 5 sind einfache Drehanzeiger 1c, 2c, 4c und 5c zugeordnet, die pro Radumdrehung nur wenige Impulse abgeben. Ist der Abstand dieser Impulse oder deren Zahl pro vorgegebener Zeit kleiner als eine vorgegeben Größe, und zwar bei allen Rädern 1, 2, 4 und 5 oder einem vorgegebenen Teil davon, so wird dies in der Umschalteinrichtung 10, der die Signale dieser Drehmeßwertgeber zugeführt werden, festgestellt und eine außerplanmäßige (d.h. während der vorgegebenen Laufzeit der select-high-Regelung eingreifende) Umschaltung auf select-low-Betrieb vorgenommen.

Ein Schaltungsbeispiel zeigt Fig. 2. Dort werden an den Klemmen 20 die Signale der Drehanzeiger 1c, 2c, 4c und 5c zugeführt. Die Zeitglieder 21 geben ein Signal ab, wenn die Impulse innerhalb eines vorgegebenen Zeitraums auftreten. Das nachgeschaltete Oder-Gatter 22 mit invertiertem Ausgang gibt ein Signal ab, wenn an keinem Ausgang der Zeitglieder 21 ein Signal auftritt. Diese wird als Umschaltsignal in den select-low Betrieb benutzt, wenn selecthigh-Betrieb gerade wirksam ist.

Man kann jeweils die Signale der Drehanzeiger 1c und 2c bzw. 4c und 5c durch Parallel- oder Hintereinanderschaltung über eine Leitung zur Schaltungsanordnung 10 übertragen und aus der Frequenz erkennen, ob beide Räder, nur noch eines oder keines mehr dreht und hieraus den Befehl für die Umschaltung ableiten.

## Patentansprüche

1. Antiblockierregelsystem für Fahrzeuge, bei dem aus den Signalen zweier Meßwertgeber (3b, 6b) für die Radgeschwindigkeit, die je einem Rad (3, 6) einer Fahrzeugseite zugeordnet sind, in einer Auswerteschaltung (9) Regelsignale zur gemeinsamen Steuerung des Bremsdrucks an mehreren Rädern (1–6) ) jeder Fahrzeugseite mittels einer Druckregeleinheit (7) gewonnen werden, und bei dem eine Umschalteinrichtung (10) vorgesehen ist, durch die der Druck zeitweise aufgrund des Radbewegungsverhaltens des zuerst Blockierneigung zeigenden, mit dem einen Meßwertgeber (3b oder 6b) ausgerüsteten Rads (3 oder 6) (select low) und zeitweise aufgrund des Radbewegungsverhaltens des zuletzt Blockierneigung zeigenden, mit dem anderen Meßwertgeber (6b oder 3b) ausgerüsteten Rads (6 oder 3) (select-high) geregelt wird, dadurch gekennzeichnet, daß wenigstens einem Teil der nicht mit einem Meßwertgeber (3b, 6b) ausgerüsteten Räder (1, 2, 4, 5) jeder Seite lediglich die Drehung dieser Räder sensierende einfache Drehanzeiger (1c, 2c, 4c, 5c) zugeordnet sind, daß diese Drehanzeiger (1c, 2c, 4c, 5c) mit der Umschalteinrichtung (10) verbunden sind und daß diese von select-high-Betrieb auf select-low-Betrieb umschaltet, wenn wenigstens ein Teil der mit den Drehanzeiger (1c, 2c, 4c, 5c) ausgerüsteten Rädern (1, 2, 4, 5) anzeigt, daß diese keine oder nur eine sehr geringe Drehgeschwindigkeit aufweisen.

2. Antiblockierregelsystem nach Anspruch 1, dadurch gekennzeichnet, daß mehrere Drehanzeiger (1c, 2c bzw. 4c und 5c) parallel oder in Reihe an eine Übertragungsleitung angeschaltet sind und daß aus der Frequenz der ankommenden Signalfolge auf die Notwendigkeit der Umschaltung auf select-low geschlossen wird.

## Claims

1. Vehicle anti-skid control system in which control signals for the joint control of the brake pressure at a plurality of wheels (1–6) on each vehicle side by means of a pressure control unit (7) are obtained in an evaluation circuit (9) from the signals of two measured-value transmitters (3b, 6b) for the wheel speed, each associated with one wheel (3, 6) on one vehicle side, and in which a switch-over arrangement (10) is provided by which the pressure is controlled at times on the basis of the wheel-movement behaviour of the wheel (3 or 6) first showing a lock-up tendency and equipped with the one measured-value transmitter (3b or 6b) (select-low) and at times on the basis of the wheel-movement behaviour of the wheel (6 or 3) which is last to show a lock-up tendency and is equipped with the other measured-value transmitter (6b or 3b), characterized in that at least some of the wheels (1, 2, 4, 5) on each side which are not equipped with a measured-value transmitter (3b, 6b) merely have associated with them simple rotation indicators (1c, 2c, 4c, 5c) sensing the rotation of these wheels, in that these rotation indicators (1c, 2c, 4c, 5c) are connected to the switch-over arrangement (10) and in that the latter switches over from select-high operation to select-low operation when at least some of the wheels (1, 2, 4, 5) equipped with the rotation indicators (1c, 2c, 4c, 5c) indicate that these wheels have zero or only a very small rotational speed.

2. Anti-skid control system according to claim 1, characterized in that a plurality of rotation indicators (1c, 2c and 4c and 5c) are connected in parallel or in series to a transmission line and in that a conclusion is drawn from the frequency of the signal sequence arriving as to the necessity of switching over to select-low.

## Revendications

1. Système de régulation anti-blocage pour véhicules, dans lequel, à partir des signaux de deux indicateurs (3b, 6b) de valeurs de mesure pour la vitesse de rotation des roues, lesquels sont associés chacun à une roue (3, 6) d'un côté du véhicule, des signaux de régulation sont reçus dans un circuit (9) d'interprétation pour la commande commune de la pression de freinage sur plusieurs roues (1 à 6), de chaque côté du véhicule, au moyen d'une unité (7) de régulation de pression, et dans lequel un dispositif (10) de commutation est prévu, par lequel la pression est réglée, par moments en fonction du comportement du mouvement de la roue (3 ou 6) équipée d'un indicateur (3b ou 6b) de valeurs de mesure et qui, la première, montre une tendance au blocage (sélection de la régulation basse), et par moments en fonction du comportement du mouvement de la roue (6 ou 3) équipée de l'autre indicateur (6b ou 3b) de valeurs de mesure et qui, la dernière, montre une tendance au blocage, caractérisé en ce qu'à au moins un certain nombre de roues (1, 2, 4, 5) non équipées d'un indicateur (3b, 6b) de valeurs de mesure, sont associés de chaque côté du véhicule seulement des indicateurs simples (1c, 2c, 4c, 5c) de rotation, seulement sensibles à la rotation de ces roues, de telle sorte que ces indicateurs (1c, 2c, 4c, 5c) de rotation soient reliés au dispositif (10) de commutation et que celui-ci effectue la commutation du fonctionnement de la sélection de régulation haute vers le fonctionnement de la sélection de la régulation basse, quand au moins un certain nombre des roues (1, 3, 4, 5) équipées des indicateurs (1c, 2c, 4c, 5c) montrent que celles-ci ne présentent aucune vitesse de rotation ou seulement une très faible vitesse de rotation.

2. Système de régulation anti-blocage selon la revendication 1, caractérisé en ce que plusieurs indicateurs (1c, 2c, 4c, 5c respectivement) sont connectés en parallèle ou en série à un conducteur de transmission, et que, d'après la fréquence de la série de signaux qui arrivent, ledit système, selon la nécessité de la commutation, est mis en position de la sélection de la régulation basse.

FIG.1

FIG.2